# EUROPÄISCHE PATENTANMELDUNG

(11) **EP 2 696 032 A1**
(43) Veröffentlichungstag der Anmeldung: **12.02.2014**
(21) Anmeldenummer: 12179979.5
(22) Anmeldetag: 10.08.2012
(51) Int. Cl.: F01D 5/22

(54) **Laufschaufelanordnung für eine Turbomaschine**

(71) Anmelder: MTU Aero Engines AG, 80995 München (DE)
(72) Erfinder: Böck, Alexander, 82288 Kottgeisering (DE)

(57) **Zusammenfassung**

Die Erfindung betrifft eine Laufschaufelanordnung für eine Turbomaschine. Die Laufschaufelanordnung weist wenigstens zwei Schaufeln (1,2) auf, die jeweils ein Deckband (11,21) besitzen. Das Deckband weist eine Kontaktfläche (110,210) zum Kontaktieren mit einem benachbarten Deckband auf, wobei die Kontaktfläche einen gekrümmten Verlauf aufweist. Gemäß einem anderen Aspekt unterscheidet sich ein erster Freiflächenwinkel zwischen der Seitenfläche und der Kontaktfläche eines ersten Deckbands von einem zweiten Freiflächenwinkel zwischen der Seitenfläche und der Kontaktfläche eines dem ersten Deckband benachbarten zweiten Deckbands.

## Beschreibung

Die Erfindung betrifft eine Laufschaufelanordnung für eine Turbomaschine nach dem Oberbegriff der Ansprüche 1 und 2.

Aus betriebsinterner Praxis ist bereits eine Vielzahl von Laufschaufeln für Turbinen bekannt, die an einen Turbinenrotor angebracht sind. Die Laufschaufeln können ein Schaufelblatt mit einem Deckband aufweisen, das dazu dient, die Turbinenabgase an dem Schaufelblatt zu halten, so dass die Gesamteffizienz der Laufschaufeln hoch ist. Ferner ist aus betriebsinterner Praxis bereits bekannt, dass zwei unterschiedlich biegesteife Laufschaufeln abwechselnd auf dem Turbinenrotor angebracht werden. Dies bietet den Vorteil, dass eine gemeinsame Eigenfrequenz aller Laufschaufeln vermieden wird, wodurch Schwingungsamplituden bei einer Anregung in diesem Frequenzbereich durch gegenseitige Dämpfung gering ausfallen. Zudem ist aus betriebsinterner Praxis bekannt, ein schweres Deckband auf der biegeweicheren Laufschaufel und umgekehrt vorzusehen, um die zuvor genannte Dämpfung zu erhöhen.

Für die Verspannung der Deckbänder ergibt sich das Problem, dass die Biegesteifigkeiten der Laufschaufeln und die fliehkraftabhängigen Entwindungsmomente unterschiedlich sind. Im Ruhezustand der Turbine werden die biegeweicheren Laufschaufeln aufgrund der Vorspannung stärker verdreht als die biegesteiferen Laufschaufeln. Im Betrieb der Turbomaschine steigen die Entwindungsmomente der biegeweicheren Schaufeln durch das schwere Deckband mit zunehmender Drehzahl stärker an als die Entwindungsmomente der biegesteiferen Laufschaufeln mit dem leichtem Deckband. In einem optimalen Betriebspunkt der Turbomaschine ist die Verdrehung der beiden Laufschaufeln idealerweise gleich. Für den Fall, dass die Drehzahl ausgehend von dem optimalen Betriebspunkt nach oben abweicht, werden die biegesteiferen Laufschaufeln wegen dem übermächtigen Entwindungsmoment der biegeweichen Laufschaufeln stärker verdreht.

Nachteilig an den zuvor beschriebenen Laufschaufeln ist, dass die Kontaktstellen von zwei benachbarten Deckbändern nur im optimalen Betrieb der Turbomaschine in einer Kontaktfläche flächig aneinander liegen. An allen anderen Betriebspunkten erfolgt neben einem Kontaktieren der beiden Deckbänder in der Kontaktfläche ein zusätzliches Kontaktieren der Deckbänder in einem weiteren Abschnitt. Dies kann zu hohem Verschleiß führen und eine Reparatur oder den Austausch der Laufschaufeln notwendig machen.

Eine Aufgabe der Erfindung besteht darin, eine verbesserte Laufschaufelanordnung bereitzustellen.

Die Aufgabe wird durch den Gegenstand des Anspruchs 1 bzw. 2 jeweils. Vorteilhafte Ausgestaltungen der Erfindung sind Gegenstand der abhängigen Ansprüche.

Erfindungsgemäß ist eine Laufschaufelanordnung für eine Turbomaschine vorgesehen, die wenigstens zwei Schaufeln aufweist. Jede der Schaufeln weist, insbesondere an einem Ende der Schaufel, ein Deckband auf. Dabei weist jedes Deckband eine Seite mit einer Kontaktfläche auf, wobei die Seite des Deckbands z-förmig ausgebildet sein kann. Die Kontaktfläche dient zum Kontaktieren des Deckbands einer Schaufel mit einem Deckband , insbesondere einer Kontaktfläche des Deckbands, einer benachbarten Schaufel. Dabei weist die Kontaktfläche wenigstens eines Deckbands einen gekrümmten Verlauf auf.

Durch das Vorsehen der Kontaktfläche mit dem gekrümmten Verlauf wird ein Kontaktieren der benachbarten Deckbänder in einem weiteren Abschnitt des Deckbands zusätzlich zu der Kontaktfläche vermieden. Dadurch verringert sich der Verschleiß und/oder die Lebensdauer der Laufschaufeln wird erhöht.

Dabei wird im Sinne der Erfindung als Kontaktfläche der Abschnitt der Seite des Deckbands einer ersten Schaufel verstanden, die mit einem Deckband, insbesondere einer Kontaktfläche einer Seite des Deckbands, einer zweiten benachbarten Schaufel in Kontakt gebracht werden kann.

Gemäß einem weiteren Aspekt der Erfindung ist eine Laufschaufelanordnung für eine Turbomaschine vorgesehen, die wenigstens zwei Schaufeln aufweist. Jede der Schaufeln weist, insbesondere an einem Ende der Schaufel, ein Deckband auf. Dabei weist jedes Deckband eine Seite mit einer Kontaktfläche auf, wobei die Seite des Deckbands z-förmig ausgebildet sein kann. Die Kontaktfläche dient zum Kontaktieren des Deckbands einer Schaufel mit einem Deckband, insbesondere der Kontaktfläche des Deckbands, einer benachbarten Schaufel. Die Seitenfläche ist an einem Ende mit der Kontaktfläche verbunden. Dabei sind die Deckbänder der benachbarten Schaufeln derart ausgebildet, dass sich ein erster Freiflächenwinkel zwischen der Seitenfläche und der Kontaktfläche eines ersten Deckbands von einem zweiten Freiflächenwinkel zwischen der Seitenfläche und der Kontaktfläche eines dem ersten Deckband benachbarten zweiten Deckbands unterscheidet.

Durch ein derartiges Ausbilden der Deckbänder kann sichergestellt werden, dass sich die benachbarten Deckbänder nicht in einem weiteren Abschnitt neben der Kontaktfläche berühren. Ferner kann sichergestellt werden, dass ein Kontaktbereich zwischen den Deckbändern im Ruhezustand der Turbomaschine oder in einem Betriebszustand mit einer kleineren oder höheren Drehzahl als im optimalen Betriebszustand bezüglich eines Kontaktbereichs der Deckbänder im optimalen Betriebszustand der Turbomaschine geringfügig verschoben ist.

Ein weiterer Vorteil der zuvor genannten Ausbildung der Deckbänder kann darin bestehen, dass der Freiflächenwinkel an die Verdrehungsunterschiede zwischen den benachbarten Schaufeln angepasst werden kann. Im Ergebnis kann durch eine Anpassung des Freiflächenwinkels ein Spalt zwischen den benachbarten Deckbändern im Betrieb der Turbomaschine verkleinert werden, wodurch sich der Wirkungsgrad der Turbomaschine erhöht.

Im Sinne der Erfindung wird als Freiflächenwinkel insbesondere der Winkel zwischen der Kontaktfläche und der Seitenfläche verstanden, der sich in einem Verbindungsabschnitt zwischen einer Tangente an die Kontaktfläche und einer Tangente an die Seitenfläche einstellt. Als Verbindungsabschnitt wird im Sinne der Erfindung insbesondere der Abschnitt des Deckbands verstanden, in dem die Kontaktfläche und die Seitenfläche miteinander verbunden sind.

Die Kontaktfläche wenigstens eines Deckbands kann analog zu der zuvor beschriebenen Ausführung einen gekrümmten Verlauf aufweisen. Dadurch wird die Gefahr verringert, dass sich benachbarte Deckbänder in einem Abschnitt neben der Kontaktfläche berühren.

Gemäß einem weiteren Aspekt der Erfindung kann eine Laufschaufelanordnung für eine Turbomaschine vorgesehen sein, die wenigstens zwei Schaufeln aufweist. Die Schaufeln weisen, insbesondere an einem Ende der Schaufel, ein Deckband auf. Dabei weist eine Seite des Deckbands, insbesondere eine z-förmig ausgebildete Seite, eine Kontaktfläche und wenigstens zwei Seitenflächen auf. Die Kontaktfläche dient zum Kontaktieren des Deckbands einer Schaufel mit einem Deckband, insbesondere einer Kontaktfläche des Deckbands, einer benachbarten Schaufel. Dabei sind wenigstens eine erste und eine zweite Seitenfläche an einem Ende mit der Kontaktfläche jeweils verbunden. Dabei bilden bei einander in den Kontaktflächen kontaktierenden Deckbändern die erste und/oder zweite Seitenfläche sich benachbarter Deckbänder wenigstens einen von den Kontaktflächen weg divergierenden Spalt.

Die Seitenflächen, insbesondere die erste und/oder zweite Seitenfläche, eines ersten Deckbands können zu den Seitenflächen, insbesondere zu einer ersten und/oder einer zweiten Seitenfläche, eines zweiten Deckbands gegenüberliegen.

Durch das Vorsehen eines von den Kontaktflächen weg divergierenden Spalts zwischen den Seitenflächen sich benachbarter Deckbänder kann auf einfache Weise sichergestellt werden, dass sich die Deckbänder nicht in einem Abschnitt neben der Kontaktfläche berühren.

Der Freiflächenwinkel kann derart gewählt werden, dass unabhängig von der Verdrehrichtung der benachbarten Deckbänder sichergestellt ist, dass die sich gegenüberliegenden Seitenflächen der benachbarten Deckbänder wenigstens parallel zueinander verlaufen. Insbesondere kann der Freiflächenwinkel derart gewählt werden, dass die ersten sich gegenüberliegenden Seitenflächen benachbarter Deckbänder parallel verlaufen und/oder ein Spalt zwischen den sich gegenüberliegenden zweiten Seitenflächen benachbarter Deckbänder einen von den Kontaktflächen weg divergierenden Verlauf besitzt. Eine derartige Anordnung der Deckbänder relativ zueinander kann sich ergeben, wenn sich die Turbomaschine im Ruhezustand befindet oder ein Rotor der Turbomaschine mit einer Drehzahl betrieben wird, die kleiner oder höher als die Drehzahl im optimalen Betriebszustand der Turbomaschine ist. Im optimalen Betriebszustand kann sich zwischen den ersten und/oder zweiten Seitenflächen benachbarter Deckbänder jeweils ein von den Kontaktflächen weg divergierender Spalt ausbilden. Im Ergebnis wird durch eine geeignete Wahl des Freiflächenwinkels sichergestellt, dass ein Berühren von benachbarten Deckbändern in einem Abschnitt neben der Kontaktfläche verhindert wird.

Die Kontaktflächen der Deckbänder können vom Deckband aus gesehen konvex ausgebildet sein. Dies bedeutet, dass die Kontaktflächen ballig ausgebildet sein können. Eine ballige Ausbildung der Kontaktflächen bietet den Vorteil, dass die Gefahr eines Kontaktierens der Seitenflächen sich benachbarter Deckbänder reduziert wird. Ferner kann ein Deckband zwei z-förmige Seiten aufweisen, die an sich gegenüberliegenden Enden des Deckbands vorgesehen sind. Eine z-förmige Seite des Deckbands kann die Kontaktfläche und zwei mit der Kontaktfläche verbundene Seitenflächen aufweisen, wobei die Kontaktfläche zwischen den zwei Seitenflächen vorgesehen sein kann.

In einer bevorzugten Ausführung können wenigstens zwei Schaufeln, insbesondere wenigstens zwei Schaufelblätter, unterschiedliche Biege- und/oder Torsionssteifigkeiten aufweisen. Zusätzlich oder alternativ können wenigstens zwei Deckbänder vorgesehen sein, die unterschiedliche Massen und/oder Massenträgheitsmomente besitzen. Dabei kann insbesondere eine biegeweiche Schaufel mit einem schweren Deckband und/oder mit einem Deckband mit einem hohen Massenträgheitsmoment versehen sein. Dagegen kann eine biegesteife Schaufel insbesondere mit einem leichten Deckband und/oder mit einem Deckband mit einem geringen Massenträgheitsmoment versehen sein. Die zuvor beschriebenen Schaufeln können in Umfangsrichtung gesehen abwechselnd an dem Rotor der Turbomaschine angebracht sein.

Dies bedeutet, dass an den Rotor der Turbomaschine eine biegesteife Schaufel mit einem Deckband mit geringer Masse und/oder geringem Massenträgheitsmoment gefolgt von einer biegeschwachen Schaufel mit einem Deckband mit großer Masse und/oder großem Massenträgheitsmoment angebracht werden kann. Dies bietet den Vorteil, dass im Betrieb der Turbomaschine eine gemeinsame Eigenfrequenz der Schaufeln vermieden wird und die Schwingungsamplituden bei einer Anregung in diesem Frequenzbereich durch gegenseitige Dämpfung der Schaufeln niedrig ausfallen.

Der Verbindungsabschnitt zwischen der Kontaktfläche und der Seitenfläche kann abgerundet sein. Der Verbindungsabschnitt gehört im Sinne der Erfindung nicht mehr zu der Kontaktfläche, da ein benachbartes Deckband nicht in Kontakt mit dem Verbindungsabschnitt gebracht werden kann.

Die oben beschriebene Laufschaufelanordnung kann in einer Gasturbine eingesetzt werden. Insbesondere kann die oben beschriebene Laufschaufelanordnung in einem Flugtriebwerk eingesetzt werden. Der Einsatz der Laufschaufelanordnung ist jedoch nicht auf die Gasturbine und das Flugtriebwerk beschränkt, sondern kann auch in anderen Turbomaschinen eingesetzt werden.

Weitere Merkmale und Vorteile ergeben sich aus den Unteransprüchen und dem Ausführungsbeispiel. Hierzu zeigen:
- Fig. 1a: eine Draufsicht auf erfindungsgemäße Deckbänder in einem Ruhezustand der Turbomaschine,
- Fig. 1b: eine Draufsicht auf erfindungsgemäße Deckbänder in einem optimalen Betriebszustand der Turbomaschine,
- Fig. 1c: eine Draufsicht auf erfindungsgemäße Deckbänder in einem Betriebszustand, in dem die Drehzahl des Rotors der Turbomaschine größer ist als im optimalen Betriebszustand,
- Fig. 2a: eine vergrößerte Darstellung eines Übergangsbereichs zwischen zwei benachbarten Deckbändern in einem Ruhezustand der Betriebsmaschine,
- Fig. 2b: eine vergrößerte Darstellung eines Übergangsbereichs zwischen zwei benachbarten Deckbändern in einem optimalen Betriebszustand der Turbomaschine,
- Fig. 2c: eine vergrößerte Darstellung eines Übergangsbereichs zwischen zwei benachbarten Deckbändern in einem Betriebszustand, in dem die Drehzahl des Rotors der Turbomaschine größer ist als im optimalen Betriebszustand.

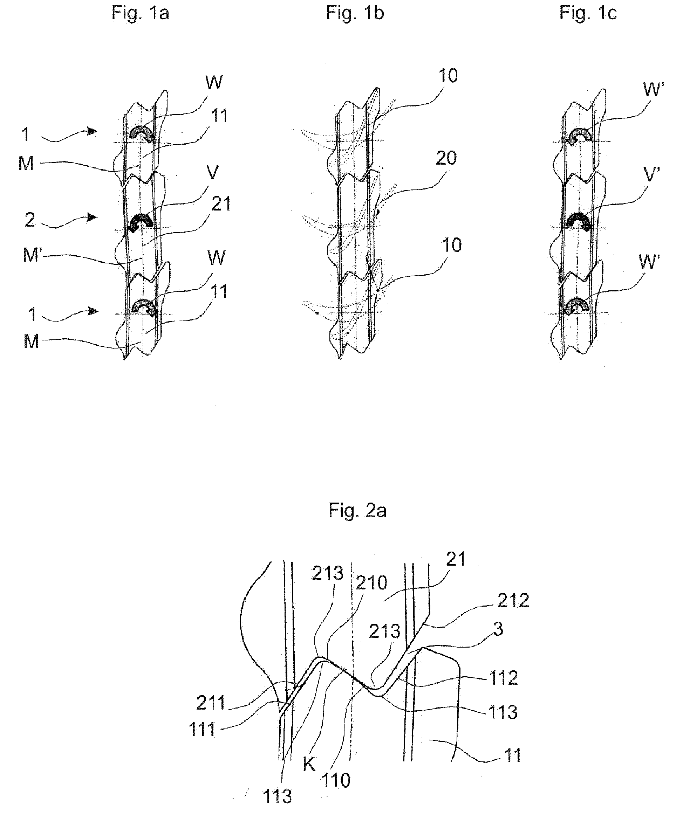

In den Figuren 1a bis 1c wird jeweils eine Draufsicht auf eine Laufschaufelanordnung einer Turbomaschine gezeigt, die drei Schaufeln 1, 2 aufweist. Die Schaufeln 1, 2 weisen jeweils ein in Figur 1b gezeigtes Schaufelblatt 11, 21 auf. An einem Endabschnitt des Schaufelblatts 10, 20 ist ein Deckband 11, 21 vorgesehen. Die Schaufeln 1, 2 sind an einem in den Figuren nicht dargestellten Rotor der Turbomaschine mit Vorspannung befestigt.

Eine erste und dritte Schaufel 1 weisen jeweils ein biegesteifes Schaufelblatt 10 auf. Ferner weisen die erste und dritte Laufschaufel 1 jeweils ein Deckband 11 mit einer geringen Masse und/oder einem geringen Massenträgheitsmoment auf. Eine zweite Schaufel 2 ist zwischen der ersten und dritten Schaufel 1 angeordnet. Die zweite Schaufel 2 weist ein biegeschwaches Schaufelblatt 20 und ein Deckband 21 mit einer großen Masse und/oder mit einem großen Massenträgheitsmoment auf. Insbesondere ist die Biegesteifigkeit der zweiten Schaufel 2 geringer als die der ersten und dritten Schaufel 1. Ferner weist das Deckband 21 der zweiten Schaufel 2 eine größere Masse und/oder ein größeres Massenträgheitsmoment auf als das Deckband 11 der ersten und dritten Schaufel 1.

In Figur 1a ist ein Zustand der Laufschaufelanordnung gezeigt, in der sich die nicht dargestellte Turbomaschine in einem Ruhezustand befindet. Dies bedeutet, dass auf die Schaufeln 1, 2 keine Fliehkraft wirkt und die Verdrehung der einzelnen Schaufeln 1, 2 auf der statischen Vorspannung beruht. Dabei erfolgt eine Verdrehung der ersten Schaufeln 1 in Richtung W und der zweiten Schaufel 2 in Richtung V, die entgegengesetzt zu der Richtung W gerichtet ist. Wie aus Figur 1a ersichtlich ist, verlaufen die Mittelachsen M, M' der Deckbänder 11, 21 im Ruhezustand der Turbomaschine nicht koaxial zueinander.

In dem in Figur 1b dargestellten Zustand wird die Turbomaschine in einem optimalen Betriebszustand betrieben. Bei einem Anstieg der Drehzahl der Turbomaschine von dem Ruhezustand in den optimalen Betriebszustand wirken auf die Schaufeln 1, 2 Entwindungsmomente. Dabei steigen die Entwindungsmomente der biegeweichen Schaufel 2 durch das schwerere Deckband 21 stärker an als das der biegesteifen Schaufeln 1, so in einem Betriebspunkt die Verdrehungen der Schaufeln 1, 2 gleich werden. In diesem Zustand verlaufen die Mittelachsen M, M' der Deckbänder 11, 21 koaxial zueinander.

In dem in Figur 1c dargestellten Zustand weist der Rotor der Turbomaschine eine größere Drehzahl als im optimalen Betriebszustand auf. In diesem Fall werden die biegesteiferen ersten und dritten Schaufeln 1 wegen dem übermächtigen Entwindungsmoment der biegeweichen zweiten Schaufel 2 stärker verdreht. Die Verdrehung der Schaufeln 1, 2 erfolgt in einer Richtung V', W', die entgegengesetzt zu der Verdrehrichtung V, W im Ruhezustand der Turbomaschine ist. In dem in Figur 1c dargestellten Zustand verlaufen die Mittelachsen M, M' der Deckbänder 11, 21 nicht koaxial zueinander.

Figur 2a zeigt eine vergrößerte Darstellung des Übergangsbereichs zwischen dem Deckband 21 der zweiten Schaufel 2 und dem Deckband 11 der ersten Schaufel 11. Beide Deckbänder 11, 21 weisen an sich zugewandten Enden jeweils z-förmig ausgebildete Seiten auf. Die z-förmig ausgebildete Seite eines Deckbands 11, 21 weist jeweils eine Kontaktfläche 110, 210 und zwei Seitenflächen 111, 112, 211, 212 auf, die an einem Ende mit der Kontaktfläche 110, 210 verbunden sind. Dabei ist ein Übergangsbereich 113, 213 abgerundet, in dem die Seitenflächen 111, 112, 211, 212 mit den Kontaktflächen 110, 210 verbunden sind. Die Kontaktfläche 110, 210 ist zwischen den Seitenflächen 111, 112, 211, 212 vorgesehen.

Die Kontaktfläche 110 des Deckbands 11 der ersten Schaufel 1 ist ballig ausgebildet. Dies bedeutet, dass diese vom Deckband 11 aus gesehen einen konvex gekrümmten Verlauf aufweist. Die Kontaktfläche 210 des Deckbands 21 der zweiten Schaufel 2 weist einen geraden, ungekrümmten Verlauf auf. Aufgrund der in Figur 1a gezeigten Verdrehung der ersten und zweiten Schaufel 1, 2 in die Richtungen V, W erfolgt eine Kontaktierung der beiden Deckbänder 11, 21 in einem Kontaktbereich K der Kontaktfläche, der näher zu einer ersten Seitenfläche 111, 211 angeordnet ist als zu einer zweiten Seitenfläche 112, 212. Im dargestellten Fall verlaufen die sich gegenüberliegenden ersten Seitenflächen 111, 211 im Wesentlichen parallel zueinander. Die sich gegenüberliegenden zweiten Seitenflächen 112, 212 verlaufen derart zueinander, dass ein zwischen diesen vorgesehener Spalt 3 einen von den Kontaktflächen 110, 210 weg divergierenden Verlauf besitzt.

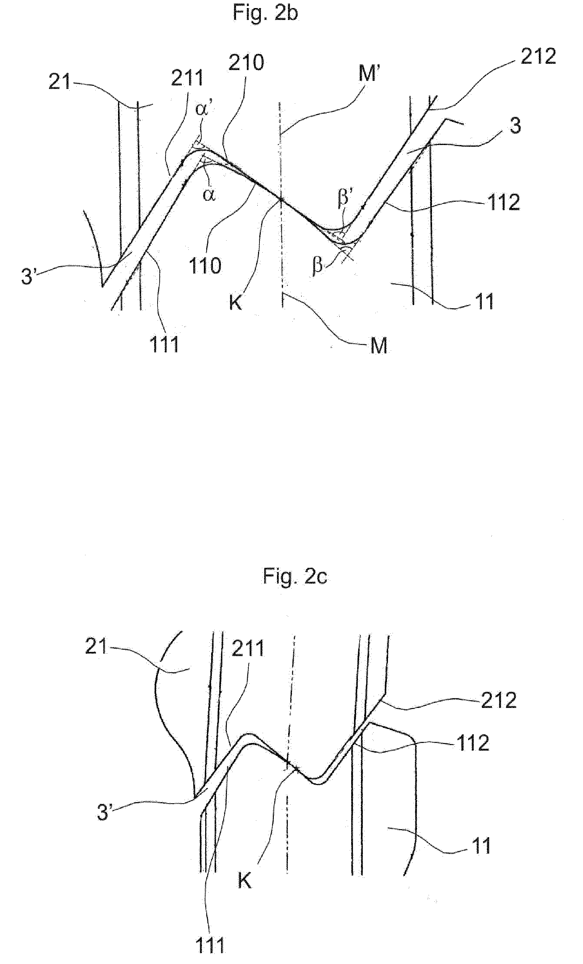

Figur 2b zeigt den Zustand der Deckbänder 11, 21 für den Fall, dass die Turbomaschine im optimalen Betriebszustand betrieben wird. Wie aus Figur 2b ersichtlich ist, befindet sich der Kontaktbereich K zwischen den beiden Deckbändern 11, 21 in der Mitte der Kontaktfläche 110, 210. Dies bedeutet, dass der Abstand des Kontaktbereichs K zu der ersten und der zweiten Seitenfläche 111, 112, 211, 212 gleich ist.

Ferner ist aus Figur 2b ersichtlich, dass sich die Freiflächenwinkel α, α' zwischen der ersten Seitenfläche 111 und der Kontaktfläche 110 des ersten Deckbands 11 und zwischen der ersten Seitenfläche 211 und der Kontaktfläche 210 des zweiten Deckbands 21 voneinander unterscheiden. Das gleiche gilt für einen Freiflächenwinkel β, β' zwischen der zweiten Seitenfläche 112 und der Kontaktfläche 110 des ersten Deckbands 11 und der zweiten Seitenfläche 212 und der Kontaktfläche 210 des zweiten Deckbands 21. Dies führt dazu, dass der Spalt 3, 3'zwischen den sich gegenüberliegenden ersten Seitenflächen 111, 211 des ersten und zweiten Deckbands und den sich gegenüberliegenden zweiten Seitenflächen 112, 212 des ersten und zweiten Deckbands 11, 21 jeweils einen von den Kontaktflächen 110, 210 weg divergierenden Verlauf besitzen.

Der Freiflächenwinkel α, β entspricht, wie aus Figur 2b ersichtlich ist, einem Winkel zwischen den gestrichelt dargestellten Tangenten der Kontaktfläche 110 und der jeweiligen Seitenfläche.

In Figur 2c wird der Zustand der Deckbänder 11, 21 für den Fall gezeigt, dass der Rotor der Turbomaschine mit einer größeren Drehzahl betrieben wird als im in Figur 2b gezeigten optimalen Betriebszustand. In diesem Fall verschiebt sich der Kontaktbereich K zwischen den beiden Deckbändern 11, 21 in Richtung zur zweiten Seitenfläche 112, 212. Dabei verlaufen die sich gegenüberliegenden zweiten Seitenflächen 112, 212 parallel zueinander und der zwischen den ersten Seitenflächen 111, 211 ausgebildete Spalt 3' weist einen von den Kontaktflächen weg divergierenden Verlauf auf.

### Bezugszeichenliste

- 1: biegesteife Schaufel
- 2: biegeschwache Schaufel
- 3, 3': Spalt
- 10: Schaufelblatt der biegesteifen Schaufel
- 20: Schaufelblatt der biegeschwachen Schaufel
- 11: Deckband der biegesteifen Schaufel
- 21: Deckband der biegeschwachen Schaufel
- 110: Kontaktfläche der biegesteifen Schaufel
- 111: erste Seitenfläche der biegesteifen Schaufel
- 112: zweite Seitenfläche der biegesteifen Schaufel
- 113: Verbindungsabschnitt der biegesteifen Schaufel
- 210: Kontaktfläche der biegeschwachen Schaufel
- 211: erste Seitenfläche der biegeschwachen Schaufel
- 212: zweite Seitenfläche der biegeschwachen Schaufel
- 213: Verbindungsabschnitt der biegesteifen Schaufel
- K: Kontaktbereich
- M, M': Mittelachse
- V, V': Verdrehrichtung der biegeschwachen Schaufel
- W, W': Verdrehrichtung der biegesteifen Schaufel

## Patentansprüche

1. Laufschaufelanordnung für eine Turbomaschine mit wenigstens zwei Schaufeln (1, 2), die jeweils ein Deckband (11, 21) aufweisen, wobei eine Seite des Deckbands (11, 21), insbesondere eine z-förmig ausgebildete Seite, eine Kontaktfläche (110, 210) zum Kontaktieren mit einem benachbarten Deckband (11, 21) aufweist, **dadurch gekennzeichnet, dass** die Kontaktfläche (110, 210) wenigstens eines Deckbands (11, 21) einen gekrümmten Verlauf aufweist.

2. Laufschaufelanordnung für eine Turbomaschine mit wenigstens zwei Schaufeln (1, 2), die jeweils ein Deckband (11, 21) aufweisen, wobei eine Seite des Deckbands (11, 21), insbesondere eine z-förmig ausgebildete Seite, eine Kontaktfläche (110, 210) zum Kontaktieren mit einem benachbarten Deckband (11, 21) und wenigstens eine Seitenfläche (111, 112, 211, 212) aufweist, die an einem Ende mit der Kontaktfläche (110, 210) verbunden ist, **dadurch gekennzeichnet, dass** sich ein erster Freiflächenwinkel (α, β) zwischen der Seitenfläche (111, 112) und der Kontaktfläche (110) eines ersten Deckbands (11) von einem zweiten Freiflächenwinkel (α', β') zwischen der Seitenfläche (211, 212) und der Kontaktfläche (210) eines dem ersten Deckband (11) benachbarten zweiten Deckbands (21) unterscheidet.

3. Laufschaufelanordnung nach Anspruch 2, **dadurch gekennzeichnet, dass** die Kontaktfläche (110, 210) wenigstens eines Deckbands (11, 21) einen gekrümmten Verlauf aufweist.

4. Laufschaufelanordnung nach einem der vorhergehenden Ansprüche, **dadurch gekennzeichnet, dass** die Kontaktfläche (110, 210) konvex ausgebildet ist.

5. Laufschaufelanordnung nach einem der vorhergehenden Ansprüche, **dadurch gekennzeichnet, dass** wenigstens zwei Schaufeln (1, 2) unterschiedliche Biege- und/oder Torsionssteifigkeiten aufweisen.

6. Laufschaufelanordnung nach einem der vorhergehenden Ansprüchen, **dadurch gekennzeichnet, dass** wenigstens zwei Deckbänder (11, 21) unterschiedliche Massenträgheitsmomente und/oder Massen aufweisen.

7. Laufschaufelanordnung nach einem der vorhergehenden Ansprüchen, **dadurch gekennzeichnet, dass** das Deckband (11, 21) zwei z-förmig ausgebildete Seiten aufweist, die an sich gegenüberliegenden Enden des Deckbands (11, 21) angeordnet sind.

8. Laufschaufelanordnung nach einem der vorhergehenden Ansprüche, **dadurch gekennzeichnet, dass** die Kontaktfläche (110, 210) zwischen den Seitenflächen (111, 112, 211, 212) angeordnet ist und/oder ein Verbindungsabschnitt (113, 213) zwischen der Kontaktfläche (110, 210) und der Seitenfläche (111, 112, 211, 212) abgerundet ist.

9. Laufschaufelanordnung nach einem der vorhergehenden Ansprüche, **dadurch gekennzeichnet, dass** die Seitenfläche (111, 112) des ersten Deckbands (11) der Seitenfläche (211, 212) des zweiten Deckbands (21) gegenüberliegt.

10. Gasturbine, insbesondere Flugtriebwerk, mit einer Laufschaufelanordnung nach einem der vorhergehenden Ansprüche.
